(19) Europäisches Patentamt
European Patent Office
Office européen des brevets

(11) EP 4 366 066 A1

# (12) EUROPEAN PATENT APPLICATION

published in accordance with Art. 153(4) EPC

(43) Date of publication:
**08.05.2024 Bulletin 2024/19**

(21) Application number: **22832888.6**

(22) Date of filing: **17.06.2022**

(51) International Patent Classification (IPC):
***H01M 50/403*** (2021.01) ***H01M 4/505*** (2010.01)
***H01M 4/525*** (2010.01) ***H01M 10/0566*** (2010.01)
***H01M 50/411*** (2021.01) ***H01M 50/414*** (2021.01)
***H01M 50/42*** (2021.01) ***H01M 50/429*** (2021.01)
***H01M 50/443*** (2021.01) ***H01M 50/449*** (2021.01)

(52) Cooperative Patent Classification (CPC):
**H01M 4/505; H01M 4/525; H01M 10/0566; H01M 50/403; H01M 50/411; H01M 50/414; H01M 50/42; H01M 50/429; H01M 50/443; H01M 50/449;** Y02E 60/10

(86) International application number:
**PCT/JP2022/024401**

(87) International publication number:
**WO 2023/276738 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 JP 2021109691**

(71) Applicant: **Zeon Corporation**
**Tokyo 100-8246 (JP)**

(72) Inventors:
- **MIYAZAKI Akihiko**
  **Tokyo 100-8246 (JP)**
- **MOSAKI Shiho**
  **Tokyo 100-8246 (JP)**

(74) Representative: **Maiwald GmbH**
**Elisenhof**
**Elisenstraße 3**
**80335 München (DE)**

## (54) SLURRY COMPOSITION FOR NON-AQUEOUS SECONDARY BATTERY FUNCTIONAL LAYERS, SEPARATOR FOR NON-AQUEOUS SECONDARY BATTERIES, AND NON-AQUEOUS SECONDARY BATTERY

(57) Provided is a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery. The slurry composition contains functional particles, an insoluble polymer, a soluble polymer, and a solvent. The functional particles include foaming agent particles. The content of the insoluble polymer is not less than 1 part by mass and not more than 10 parts by mass per 100 parts by mass of the functional particles, and the content of the soluble polymer is not less than 1 part by mass and not more than 10 parts by mass per 100 parts by mass of the functional particles. The soluble polymer has a thermal decomposition temperature of 130°C or higher.

EP 4 366 066 A1

## Description

### TECHNICAL FIELD

The present disclosure relates to a slurry composition for a non-aqueous secondary battery functional layer, a separator for a non-aqueous secondary battery, and a non-aqueous secondary battery.

### BACKGROUND

Non-aqueous secondary batteries (hereinafter, also referred to as "secondary batteries") such as lithium ion secondary batteries have characteristics such as compact size, light weight, high energy density, and the ability to be repeatedly charged and discharged, and are used in a wide variety of applications.

A secondary battery typically includes electrodes (positive electrode and negative electrode) and a separator that isolates the positive electrode and the negative electrode from each other and prevents short-circuiting between the positive and negative electrodes. Conventionally, a separator in which a layer for imparting a specific function to a battery member, such as a porous membrane layer for improving heat resistance and strength or an adhesive layer for improving adhesiveness with an electrode (hereinafter, "functional layer for a non-aqueous secondary battery" or "functional layer" may be used as a general term for these layers), is provided on the surface of a separator substrate may be used as the separator.

Moreover, the functional layer may be formed by applying a slurry composition for a non-aqueous secondary battery functional layer (hereinafter, also referred to as a "slurry composition") that contains components such as an insoluble polymer onto a substrate such as a separator substrate and then drying a coating film on the substrate, for example.

In recent years, attempts have been made to improve slurry compositions used in the formation of functional layers in order to achieve further improvement of secondary battery performance.

As one specific example, Patent Literature (PTL) 1 discloses a slurry composition for a functional layer containing an insoluble polymer that is a polymer including a specific functional group and a melamine compound that has a volume-average particle diameter within a specific range, and in which the proportion constituted by the melamine compound among the total of the insoluble polymer and the melamine compound is within a specific range. The slurry composition for a functional layer in PTL 1 enables formation of a functional layer that can closely adhere strongly to a separator substrate and also enables enhancement of rate characteristics of a secondary battery.

### CITATION LIST

#### Patent Literature

PTL 1: WO2020/040163A1

### SUMMARY

#### (Technical Problem)

In a secondary battery, it is desirable to sufficiently inhibit heat generation in the event of an internal short circuit. In addition, it is desirable to reduce internal resistance in a secondary battery in order that excellent battery characteristics are displayed.

In other words, there has been demand for a new technique that sufficiently inhibits heat generation in the event of an internal short circuit of a secondary battery while also reducing internal resistance of the secondary battery.

Accordingly, one object of the present disclosure is to provide a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery.

Another object of the present disclosure is to provide a separator for a non-aqueous secondary battery including a functional layer that can inhibit heat generation in the event of an internal short circuit of a non-aqueous secondary battery and can also reduce internal resistance of the non-aqueous secondary battery.

Yet another object of the present disclosure is to provide a non-aqueous secondary battery having excellent inhibition of heat generation in the event of an internal short circuit and reduced internal resistance.

(Solution to Problem)

The inventors conducted diligent investigation with the aim of solving the problems set forth above. The inventors discovered that heat generation in the event of an internal short circuit of a secondary battery can be inhibited while also reducing internal resistance of the non-aqueous secondary battery by using a slurry composition that contains functional particles including foaming agent particles, an insoluble polymer, a soluble polymer having a thermal decomposition temperature that is not lower than a specific value, and a solvent and in which quantitative ratios of the insoluble polymer and the soluble polymer relative to the functional particles are within specific ranges. In this manner, the inventors completed the present disclosure.

Specifically, the present disclosure aims to advantageously solve the problems set forth above, and, according to the present disclosure, slurry compositions for a non-aqueous secondary battery functional layer according to the following (1) to (9), a separator for a non-aqueous secondary battery according to the following (10), and non-aqueous secondary batteries according to the following (11) and (12) are provided.

(1) A slurry composition for a non-aqueous secondary battery functional layer comprising functional particles, an insoluble polymer, a soluble polymer, and a solvent, wherein the functional particles include foaming agent particles, content of the insoluble polymer is not less than 1 part by mass and not more than 10 parts by mass per 100 parts by mass of the functional particles, content of the soluble polymer is not less than 1 part by mass and not more than 10 parts by mass per 100 parts by mass of the functional particles, and the soluble polymer has a thermal decomposition temperature of 130°C or higher.

By using a slurry composition that contains functional particles including foaming agent particles, an insoluble polymer, a soluble polymer having a thermal decomposition temperature of 130°C or higher, and a solvent and in which quantitative ratios of the insoluble polymer and the soluble polymer relative to the functional particles are within the ranges set forth above in this manner, it is possible to produce a functional layer that is capable of forming a non-aqueous secondary battery having excellent inhibition of heat generation in the event of an internal short circuit and reduced internal resistance.

Note that when a polymer is said to be "insoluble" in the present disclosure, this means that the polymer is insoluble in a solvent that is contained in a slurry composition and that when 0.5 g of the polymer is dissolved in 100 g of the solvent at a temperature of 25°C, the amount of solvent-insoluble content is 50 mass% or more.

Also note that when a polymer is said to be "soluble" in the present disclosure, this means that the polymer is soluble in a solvent that is contained in a slurry composition and that when 0.5 g of the polymer is dissolved in 100 g of the solvent at a temperature of 25°C, the amount of solvent-insoluble content is less than 50 mass%.

Moreover, the "amount of solvent-insoluble content" referred to in the present disclosure can be measured by a method described in the EXAMPLES section.

Furthermore, the "thermal decomposition temperature" of a soluble polymer referred to in the present disclosure can be measured by a method described in the EXAMPLES section of the present specification.

Also, the term "functional particles" as used in the present disclosure is a concept comprised of non-conductive particles used for improving heat resistance and/or strength of a functional layer and foaming agent particles that decompose to release incombustible gas through heat. In other words, the "insoluble polymer" referred to in the present disclosure is not included among the "functional particles" even supposing that the "insoluble polymer" has a particulate form.

(2) The slurry composition for a non-aqueous secondary battery functional layer according to the foregoing (1), wherein the soluble polymer is selected from the group consisting of a cellulose derivative, polyvinyl alcohol, and a polyacrylic acid compound.

By using a slurry composition that contains a soluble polymer selected from the group consisting of a cellulose derivative, polyvinyl alcohol, and a polyacrylic acid compound in this manner, it is possible to produce a functional layer that is capable of forming a non-aqueous secondary battery having excellent inhibition of heat generation in the event of an internal short circuit and reduced internal resistance.

(3) The slurry composition for a non-aqueous secondary battery functional layer according to the foregoing (1) or (2), wherein the insoluble polymer includes one or more functional groups selected from the group consisting of a carboxy group, a hydroxyl group, an amino group, an epoxy group, an oxazoline group, a sulfo group, a nitrile group, an ester group, and an amide group.

By using an insoluble polymer that includes at least any one of the functional groups set forth above in this manner, it is possible to further inhibit heat generation in the event of an internal short circuit of a secondary battery while also even further reducing internal resistance of the secondary battery.

(4) The slurry composition for a non-aqueous secondary battery functional layer according to any one of the foregoing (1) to (3), wherein the foaming agent particles have a thermal decomposition temperature of not lower than

150°C and not higher than 450°C.

When the thermal decomposition temperature of the foaming agent particles is within the range set forth above in this manner, heat generation in the event of an internal short circuit of a secondary battery can be further inhibited while also even further reducing internal resistance of the secondary battery.

Note that the "thermal decomposition temperature" of foaming agent particles referred to in the present disclosure can be measured by a method described in the EXAMPLES section of the present specification.

(5) The slurry composition for a non-aqueous secondary battery functional layer according to any one of the foregoing (1) to (4), wherein an amount of foaming of the foaming agent particles at 400°C is 10 $cm^3/g$ or more as converted for 25°C and 1 atm.

When the amount of foaming of the foaming agent particles at 400°C is 10 $cm^3/g$ or more as converted for 25°C and 1 atm in this manner, heat generation in the event of an internal short circuit of a secondary battery can be further inhibited while also even further reducing internal resistance of the secondary battery.

Note that the "amount of foaming" of foaming agent particles at 400°C referred to in the present disclosure can be measured by a method described in the EXAMPLES section of the present specification.

Also note that "1 atm" referred to in the present disclosure means 101325 Pa.

(6) The slurry composition for a non-aqueous secondary battery functional layer according to any one of the foregoing (1) to (5), wherein the foaming agent particles are a melamine compound.

When the slurry composition contains a melamine compound as the foaming agent particles in this manner, heat generation in the event of an internal short circuit of a secondary battery can be further inhibited while also even further reducing internal resistance of the secondary battery.

(7) The slurry composition for a non-aqueous secondary battery functional layer according to the foregoing (6), wherein the melamine compound is melamine cyanurate.

When the slurry composition contains melamine cyanurate as the foaming agent particles in this manner, heat generation in the event of an internal short circuit of a secondary battery can be further inhibited while also even further reducing internal resistance of the secondary battery.

(8) The slurry composition for a non-aqueous secondary battery functional layer according to any one of the foregoing (1) to (7), wherein a mass ratio of content of the insoluble polymer relative to content of the soluble polymer is more than 0.30 and less than 6.0.

When the mass ratio of the content of the insoluble polymer relative to the content of the soluble polymer (hereinafter, also abbreviated as "insoluble polymer/soluble polymer (mass ratio)") is within the range set forth above in this manner, heat generation in the event of an internal short circuit of a secondary battery can be further inhibited while also even further reducing internal resistance of the secondary battery.

(9) The slurry composition for a non-aqueous secondary battery functional layer according to any one of the foregoing (1) to (8), further comprising a wetting agent.

When the slurry composition further contains a wetting agent in this manner, heat generation in the event of an internal short circuit of a secondary battery can be further inhibited while also even further reducing internal resistance of the secondary battery.

(10) A separator for a non-aqueous secondary battery comprising: a separator substrate; and a functional layer on the separator substrate, wherein the functional layer is a dried product of the slurry composition for a non-aqueous secondary battery functional layer according to any one of the foregoing (1) to (9).

By using a separator that includes a functional layer obtained through drying of the slurry composition according to any one of the foregoing (1) to (9) in this manner, it is possible to further inhibit heat generation in the event of an internal short circuit of a secondary battery while also even further reducing internal resistance of the secondary battery.

(11) A non-aqueous secondary battery comprising a positive electrode, a negative electrode, a separator, and an electrolyte solution, wherein the separator is the separator for a non-aqueous secondary battery according to the foregoing (10).

A non-aqueous secondary battery that includes the separator for a non-aqueous secondary battery according to the foregoing (10) in this manner has excellent inhibition of heat generation in the event of an internal short circuit and reduced internal resistance.

(12) The non-aqueous secondary battery according to the foregoing (11), wherein the positive electrode contains a positive electrode active material, and the positive electrode active material is a lithium metal complex oxide represented by a composition formula $Li_xNi_yMn_zCo_{(1-y-z)}O_2$, where 0.95 <_ x ≤ 1.2, 0.70 ≤ y ≤ 0.95, z > 0, and 1 - y - z > 0.

By using a lithium metal complex oxide that is represented by the composition formula set forth above as the positive electrode active material contained in the positive electrode in this manner, it is possible to increase the capacity of the secondary battery.

(Advantageous Effect)

According to the present disclosure, it is possible to provide a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery.

Moreover, according to the present disclosure, it is possible to provide a separator for a non-aqueous secondary battery including a functional layer that can inhibit heat generation in the event of an internal short circuit of a non-aqueous secondary battery and can also reduce internal resistance of the non-aqueous secondary battery.

Furthermore, according to the present disclosure, it is possible to provide a non-aqueous secondary battery having excellent inhibition of heat generation in the event of an internal short circuit and reduced internal resistance.

DETAILED DESCRIPTION

The following provides a detailed description of embodiments of the present disclosure.

A presently disclosed slurry composition for a non-aqueous secondary battery functional layer can be used in formation of a functional layer having a function such as reinforcement and/or adhesion inside of a non-aqueous secondary battery. Moreover, a presently disclosed separator for a non-aqueous secondary battery includes a separator substrate and a functional layer formed using the presently disclosed slurry composition for a non-aqueous secondary battery functional layer on at least one side of the separator substrate. Furthermore, a presently disclosed non-aqueous secondary battery includes the presently disclosed separator for a non-aqueous secondary battery.

(Slurry composition for non-aqueous secondary battery functional layer)

The presently disclosed slurry composition is a composition having functional particles, an insoluble polymer, and a soluble polymer dissolved and/or dispersed in a solvent. The functional particles are required to include at least foaming agent particles. Note that the presently disclosed slurry composition may contain components other than the functional particles, the insoluble polymer, the soluble polymer, and the solvent (i.e., other components).

Features of the presently disclosed slurry composition are that the content of the insoluble polymer is not less than 1 part by mass and not more than 10 parts by mass per 100 parts by mass of the functional particles, the content of the soluble polymer is not less than 1 part by mass and not more than 10 parts by mass per 100 parts by mass of the functional particles, and the thermal decomposition temperature of the soluble polymer is 130°C or higher.

As a result of the presently disclosed slurry composition containing at least functional particles that include foaming agent particles, an insoluble polymer, a soluble polymer having a thermal decomposition temperature that is not lower than the value set forth above, and a solvent and as a result of quantitative ratios of the insoluble polymer and the soluble polymer relative to the functional particles being within the ranges set forth above, it is possible to produce a secondary battery having excellent inhibition of heat generation in the event of an internal short circuit and reduced internal resistance by using this slurry composition. Although it is not certain why the effects described above are obtained by using the slurry composition set forth above in this manner, the reason for this is presumed to be as follows.

Firstly, through the quantitative ratio of the insoluble polymer relative to the functional particles being within a specific range in the presently disclosed slurry composition, the foaming agent particles and the insoluble polymer can display excellent binding capacity, and an increase of internal resistance of a secondary battery caused by the insoluble polymer can be suppressed, which is presumed to be due to the foaming agent particles and the insoluble polymer interacting well through hydrogen bonding or the like.

Moreover, the soluble polymer that is contained in the slurry composition has a thermal decomposition temperature of 130°C or higher and has a function of imparting thermal stability to a functional layer formed using the slurry composition. When the quantitative ratio of the soluble polymer relative to the functional particles is too small, heat generation in the event of an internal short circuit of a secondary battery increases due to reduction of the thermal stability of a functional layer. On the other hand, when the quantitative ratio of the soluble polymer relative to the functional particles is too large, the internal resistance of a secondary battery increases. Such problems do not occur with the presently disclosed slurry composition as a result of the quantitative ratio of the soluble polymer relative to the functional particles being within a specific range.

The above-described interactions between the foaming agent particles and the insoluble polymer and the contribution to improvement of thermal stability of a functional layer through the soluble polymer are thought to work in conjunction such that a secondary battery including a functional layer formed using the presently disclosed slurry composition has excellent inhibition of heat generation in the event of an internal short circuit and sufficiently reduced internal resistance.

<Functional particles>

The presently disclosed slurry composition contains at least foaming agent particles as the functional particles and may optionally contain non-conductive particles as the functional particles. In other words, the presently disclosed slurry composition may be a slurry composition that contains foaming agent particles and does not contain non-conductive particles or may be a slurry composition that contains both foaming agent particles and non-conductive particles.

<<Foaming agent particles>>

The foaming agent particles that are contained in the presently disclosed slurry composition are not specifically limited so long as they are a compound that decomposes to form an incombustible gas through heat. However, from a viewpoint of further inhibiting heat generation in the event of an internal short circuit of a secondary battery while also even further reducing internal resistance of the secondary battery, compounds that release nitrogen as an incombustible gas through thermal decomposition are preferable, compounds including one or more selected from the group consisting of an amino group, an azo group, a hydrazino group, a hydrazo group, and a nitroso group, derivatives of these compounds, and salts of these compounds and derivatives thereof are more preferable, compounds including either or both of an amino group and an azo group, derivatives of these compounds, and salts of these compounds and derivatives thereof are even more preferable, and melamine compounds are particularly preferable.
Note that one type of foaming agent particles may be used individually, or two or more types of foaming agent particles may be used in combination in a freely selected ratio.

[Melamine compound]

Examples of melamine compounds that may be used include melamine, derivatives of melamine, and salts of melamine and derivatives thereof. The melamine or derivative of melamine may, for example, be a compound represented by the following formula (I).
[Chem. 1]

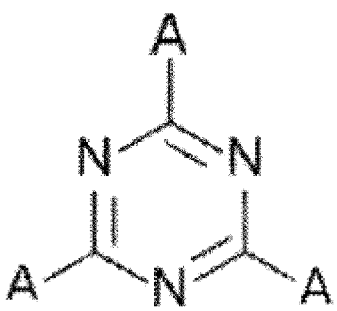

(I)

In formula (I), each A represents, independently of one another, a hydroxyl group or $NR^1R^2$ ($R^1$ and $R^2$ each represent, independently of each other, a hydrogen atom, a hydrocarbon group, or a hydroxyl group-containing hydrocarbon group; when more than one $R^1$ is present in formula (I), each $R^1$ may be the same or different; and when more than one $R^2$ is present in formula (I), each $R^2$ may be the same or different).
Note that when the hydrocarbon group and the hydroxyl group-containing hydrocarbon group of $R^1$ and $R^2$ include two or more carbon atoms, these groups may have one or more oxygen atoms (-O-) interposed between carbon atoms (however, when two or more oxygen atoms are interposed, these oxygen atoms are not adjacent to one another). The number of carbon atoms in the hydrocarbon group and the hydroxyl group-containing hydrocarbon group of $R^1$ and $R^2$ is not specifically limited but is preferably not less than 1 and not more than 5.
Moreover, examples of salts of melamine and derivatives of melamine include, but are not specifically limited to, sulfates and cyanurates.
From a viewpoint of further inhibiting heat generation in the event of an internal short circuit of a secondary battery while also even further reducing internal resistance of the secondary battery, the melamine compound is preferably melamine, ammeline, ammelide, or a salt of any thereof with cyanuric acid, is more preferably melamine or a cyanuric acid salt of melamine (melamine cyanurate), and is even more preferably melamine cyanurate.
Note that one melamine compound may be used individually, or two or more melamine compounds may be used in combination in a freely selected ratio.

[Other foaming agent particles]

Examples of foaming agent particles other than the above-described melamine compounds that may be used include azobisisobutyronitrile, p-toluenesulfonyl hydrazide, 5-methyl-1H-benzotriazole, oxybis(benzenesulfonyl hydrazide), trihydrazine triazine, azodicarbonamide, hydrazodicarbonamide, dinitrosopentamethylenetetramine, p-toluenesulfonyl semicarbazide, p,p'-oxybis(benzenesulfonyl semicarbazide), and sodium hydrogen carbonate.
Note that one type of other foaming agent particles may be used individually, or two or more types of other foaming agent particles may be used in combination in a freely selected ratio.

[Thermal decomposition temperature]

The thermal decomposition temperature of the foaming agent particles is preferably 150°C or higher, more preferably 200°C or higher, even more preferably 250°C or higher, and particularly preferably 300°C or higher, and is preferably 450°C or lower, more preferably 400°C or lower, even more preferably 380°C or lower, and particularly preferably 360°C or lower. When the thermal decomposition temperature of the foaming agent particles is 150°C or higher, heat generation in the event of an internal short circuit of a secondary battery can be further inhibited while also even further reducing internal resistance of the secondary battery because thermal decomposition of the foaming agent particles is suppressed. On the other hand, when the thermal decomposition temperature of the foaming agent particles is 450°C or lower, it becomes easier for the foaming agent particles to release incombustible gas at an appropriate timing, and heat generation in the event of an internal short circuit of a secondary battery can be further inhibited.
Note that the thermal decomposition temperature of the foaming agent particles can be adjusted by altering the type of foaming agent particles, for example.

[Volume-average particle diameter]

The volume-average particle diameter of the foaming agent particles is preferably 200 nm or more, and more preferably 250 nm or more, and is preferably 1,000 nm or less, and more preferably 700 nm or less. When the volume-average particle diameter of the foaming agent particles is 200 nm or more, a functional layer formed using the slurry composition and a separator substrate can be caused to closely adhere strongly. On the other hand, when the volume-average particle diameter of the foaming agent particles is 1,000 nm or less, a functional layer formed using the slurry composition and a separator substrate can be caused to closely adhere strongly, and internal resistance of a secondary battery can be even further reduced through a separator including the functional layer.

[Amount of foaming]

The amount of foaming of the foaming agent particles at 400°C is preferably 10 $cm^3/g$ or more, more preferably 15 $cm^3/g$ or more, and even more preferably 20 $cm^3/g$ or more as converted for 25°C and 1 atm. When the amount of foaming of the foaming agent particles at 400°C is 10 $cm^3/g$ or more as converted for 25°C and 1 atm, heat generation in the event of an internal short circuit of a secondary battery can be further inhibited while also even further reducing internal resistance of the secondary battery. Moreover, the upper limit for the amount of foaming of the foaming agent particles at 400°C is not specifically limited and can be set as 500 $cm^3/g$ or less, or as 350 $cm^3/g$ or less, for example.
Note that the amount of foaming of the foaming agent particles can be adjusted by altering the type of foaming agent particles, for example.

<<Non-conductive particles>>

The functional particles can include non-conductive particles with the aim of improving various characteristics such as heat resistance and strength of an obtained functional layer. Any known non-conductive particles that are used in secondary batteries can be used as the non-conductive particles without any specific limitations.
Specifically, although both inorganic fine particles and organic fine particles can be used as the non-conductive particles, inorganic fine particles are normally used. The material of the non-conductive particles is preferably an electrochemically stable material that is present stably in the environment of use of a secondary battery. Examples of the non-conductive particles that are preferable from such a viewpoint include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, and/or the like as

necessary.

One of these types of non-conductive particles may be used individually, or two or more of these types of non-conductive particles may be used in combination. Although no specific limitations are placed on the glass-transition temperature of organic fine particles, the glass-transition temperature is normally 25°C or higher.

In a case in which the functional particles include both foaming agent particles and non-conductive particles, the amount of the non-conductive particles in the slurry composition is preferably 100 parts by mass or less, more preferably 80 parts by mass or less, and even more preferably 60 parts by mass or less per 100 parts by mass of the foaming agent particles from a viewpoint of achieving improvement of an expected characteristic that is imparted to a functional layer through the non-conductive particles while also causing sufficiently strong close adherence between the functional layer and a separator substrate.

<Insoluble polymer>

The insoluble polymer is a component that imparts adhesiveness to a functional layer formed on a separator surface using the slurry composition. A feature of the insoluble polymer is that it is insoluble in the solvent that is contained in the slurry composition. In other words, the insoluble polymer is in a dispersed state in the solvent with a particulate form in the slurry composition.

«Type of insoluble polymer»

Any polymer can be used as the insoluble polymer without any specific limitations so long as it is a polymer that can impart adhesiveness to a functional layer formed on a separator surface. Suitable examples of polymers that may be used as the insoluble polymer include an aliphatic conjugated diene/aromatic monovinyl copolymer (polymer including mainly an aliphatic conjugated diene monomer unit and an aromatic monovinyl monomer unit), an acrylic polymer (polymer including mainly a (meth)acrylic acid alkyl ester monomer unit), a fluoropolymer (polymer including mainly a fluorine-containing monomer unit), an acrylic acid/acrylamide copolymer (polymer including mainly a (meth)acrylic acid unit and a (meth)acrylamide unit), and an acrylonitrile polymer (polymer including mainly a (meth)acrylonitrile unit). Of these polymers, an acrylic polymer is preferable.

Note that one insoluble polymer may be used individually, or two or more insoluble polymers may be used in combination in a freely selected ratio.

Known monomers can be used as an aliphatic conjugated diene monomer that can form an aliphatic conjugated diene monomer unit in the aliphatic conjugated diene/aromatic monovinyl copolymer, an aromatic monovinyl monomer that can form an aromatic monovinyl monomer unit in the aliphatic conjugated diene/aromatic monovinyl copolymer, a (meth)acrylic acid alkyl ester monomer that can form a (meth)acrylic acid alkyl ester monomer unit in the acrylic polymer, and a fluorine-containing monomer that can form a fluorine-containing monomer unit in the fluoropolymer.

The phrase "includes a monomer unit" as used in the present disclosure means that "a polymer obtained with the monomer includes a repeating unit derived from the monomer".

Furthermore, when a polymer is said to "include mainly" one type or a plurality of types of monomer units in the present disclosure, this means that "the proportional content of the one type of monomer unit or the total proportional content of the plurality of types of monomer units is more than 50 mass% when the amount of all repeating units included in the polymer is taken to be 100 mass%".

In the present disclosure, "(meth)acryl" indicates "acryl" and/or "methacryl", and "(meth)acrylo" indicates "acrylo" and/or "methacrylo".

«Functional group of insoluble polymer»

The polymer that is used as the insoluble polymer preferably includes a functional group. From a viewpoint of further inhibiting heat generation in the event of an internal short circuit of a secondary battery while also even further reducing internal resistance of the secondary battery, a carboxy group, a hydroxyl group, an amino group, an epoxy group, an oxazoline group, a sulfo group, a nitrile group, an ester group, and an amide group (hereinafter, these functional groups are also referred to collectively as "prescribed functional groups") are preferable as functional groups included in the insoluble polymer, and a carboxy group, an epoxy group, and an ester group are more preferable as functional groups included in the insoluble polymer.

Note that the polymer serving as the insoluble polymer may include one type of prescribed functional group described above or may include two or more types of prescribed functional groups described above.

No specific limitations are placed on the method by which any of the prescribed functional groups described above is introduced into the polymer. For example, although a polymer may be produced using a monomer that includes any of the prescribed functional groups described above (prescribed functional group-containing monomer) so as to

obtain a polymer that includes a prescribed functional group-containing monomer unit or any polymer may be end modified so as to obtain a polymer having any of the prescribed functional groups described above at an end thereof, the former of these methods is preferable. In other words, the polymer used as the insoluble polymer preferably includes at least any one of a carboxy group-containing monomer unit, a hydroxyl group-containing monomer unit, an amino group-containing monomer unit, an epoxy group-containing monomer unit, an oxazoline group-containing monomer unit, a sulfo group-containing monomer unit, a nitrile group-containing monomer unit, an ester group-containing monomer unit, and an amide group-containing monomer unit as a prescribed functional group-containing monomer unit, and more preferably includes at least any one of a carboxy group-containing monomer unit, an epoxy group-containing monomer unit, and an ester group-containing monomer unit as a prescribed functional group-containing monomer unit.

[Carboxy group-containing monomer unit]

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.
Examples of monocarboxylic acids include acrylic acid, methacrylic acid, and crotonic acid.
Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.
Examples of dicarboxylic acids include maleic acid, fumaric acid, and itaconic acid.
Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.
Examples of acid anhydrides of dicarboxylic acids include maleic anhydride, acrylic anhydride, methylmaleic anhydride, and dimethylmaleic anhydride.
An acid anhydride that produces a carboxy group through hydrolysis can also be used as a carboxy group-containing monomer. Of these examples, acrylic acid and methacrylic acid are preferable as carboxy group-containing monomers, and acrylic acid is more preferable as a carboxy group-containing monomer.
Note that one carboxy group-containing monomer may be used individually, or two or more carboxy group-containing monomers may be used in combination in a freely selected ratio.

[Hydroxyl group-containing monomer unit]

Examples of hydroxyl group-containing monomers that can form a hydroxyl group-containing monomer unit include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^a-COO-(C_qH_{2q}O)_p-H$ (where p represents an integer of 2 to 9, q represents an integer of 2 to 4, and $R^a$ represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; (meth)allyl thioethers of alkylene glycols such as (meth)allyl-2-hydroxyethyl thioether and (meth)allyl-2-hydroxypropyl thioether; and hydroxyl group-containing amides such as N-hydroxymethylacrylamide (N-methylolacrylamide), N-hydroxymethylmethacrylamide, N-hydroxyethylacrylamide, and N-hydroxyethylmethacrylamide.
Note that one hydroxyl group-containing monomer may be used individually, or two or more hydroxyl group-containing monomers may be used in combination in a freely selected ratio.
In the present disclosure, "(meth)allyl" indicates "allyl" and/or "methallyl".

[Amino group-containing monomer unit]

Examples of amino group-containing monomers that can form an amino group-containing monomer unit include dimethylaminoethyl (meth)acrylate, diethylaminoethyl (meth)acrylate, aminoethyl vinyl ether, and dimethylaminoethyl

vinyl ether.

Note that one amino group-containing monomer may be used individually, or two or more amino group-containing monomers may be used in combination in a freely selected ratio.

Also note that in the present disclosure, "(meth)acrylate" indicates "acrylate" and/or "methacrylate".

[Epoxy group-containing monomer unit]

Examples of epoxy group-containing monomers that can form an epoxy group-containing monomer unit include monomers that include a carbon-carbon double bond and an epoxy group.

Examples of monomers that include a carbon-carbon double bond and an epoxy group include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid. Of these examples, allyl glycidyl ether is preferable as an epoxy group-containing monomer.

Note that one epoxy group-containing monomer may be used individually, or two or more epoxy group-containing monomers may be used in combination in a freely selected ratio.

[Oxazoline group-containing monomer unit]

Examples of oxazoline group-containing monomers that can form an oxazoline group-containing monomer unit include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Note that one oxazoline group-containing monomer may be used individually, or two or more oxazoline group-containing monomers may be used in combination in a freely selected ratio.

[Sulfo group-containing monomer unit]

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid. Note that one sulfo group-containing monomer may be used individually, or two or more sulfo group-containing monomers may be used in combination in a freely selected ratio.

[Nitrile group-containing monomer unit]

Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that includes a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these examples, acrylonitrile is preferable as a nitrile group-containing monomer.

Note that one nitrile group-containing monomer may be used individually, or two or more nitrile group-containing monomers may be used in combination in a freely selected ratio.

[Ester group-containing monomer unit]

Examples of ester group-containing monomers that can form an ester group-containing monomer unit include (meth)acrylic acid alkyl ester monomers. Examples of (meth)acrylic acid alkyl ester monomers include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these examples, 2-ethylhexyl acrylate and n-butyl acrylate are preferable as ester group-containing monomers, and 2-ethylhexyl acrylate is more preferable as an ester group-containing monomer.
Note that one ester group-containing monomer may be used individually, or two or more ester group-containing monomers may be used in combination in a freely selected ratio.

[Amide group-containing monomer unit]

Examples of amide group-containing monomers that can form an amide group-containing monomer unit include acrylamide and methacrylamide.
Note that one amide group-containing monomer may be used individually, or two or more amide group-containing monomers may be used in combination in a freely selected ratio.
When the amount of all repeating units included in the polymer serving as the insoluble polymer is taken to be 100 mass%, the proportional content of prescribed functional group-containing monomer units in the polymer is preferably 30 mass% or more, more preferably 40 mass% or more, even more preferably 50 mass% or more, and particularly preferably 60 mass% or more, and is preferably 90 mass% or less, more preferably 85 mass% or less, and even more preferably 80 mass% or less. When the proportional content of prescribed functional group-containing monomer units in the polymer is within any of the ranges set forth above, heat generation in the event of an internal short circuit of a secondary battery can be further inhibited while also even further reducing internal resistance of the secondary battery.
Note that the proportional content of each type of monomer unit (repeating unit) in a polymer that is referred to in the present disclosure can be measured by a nuclear magnetic resonance (NMR) method such as $^1$H-NMR or $^{13}$C-NMR.

[Other repeating units]

The polymer serving as the insoluble polymer may include repeating units other than the prescribed functional group-containing monomer units described above (i.e., may include other repeating units). Examples of such other repeating units include, but are not specifically limited to, an aromatic monovinyl monomer unit and a cross-linkable monomer unit.
Examples of aromatic monovinyl monomers that can form an aromatic monovinyl monomer unit include styrene, $\alpha$-methylstyrene, p-t-butylstyrene, butoxystyrene, vinyltoluene, chlorostyrene, and vinylnaphthalene. Of these examples, styrene is preferable as an aromatic monovinyl monomer.
Note that one type of other repeating unit may be used individually, or two or more types of other repeating units may be used in combination in a freely selected ratio.
In a case in which the polymer serving as the insoluble polymer includes an aromatic monovinyl monomer unit, the proportional content of aromatic monovinyl monomer units in the polymer when the amount of all repeating units included in the polymer is taken to be 100 mass% is preferably 10 mass% or more, and more preferably 20 mass% or more, and is preferably 60 mass% or less, preferably 50 mass% or less, and even more preferably 40 mass% or less from a viewpoint of further inhibiting heat generation in the event of an internal short circuit of a secondary battery while also even further reducing internal resistance of the secondary battery.
Examples of cross-linkable monomers that can form a cross-linkable monomer unit include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate. Of these examples, allyl methacrylate is preferable as a cross-linkable monomer.

<<Production method of insoluble polymer>>

No specific limitations are placed on the method by which the polymer serving as the insoluble polymer is produced. For example, the polymer serving as the insoluble polymer may be produced by polymerizing a monomer composition containing the monomers described above in an aqueous solvent. Note that the proportional content of each monomer in the monomer composition can be set in accordance with the desired proportional content of each monomer unit (repeating unit) in the polymer.
The polymerization method is not specifically limited and may, for example, be any of solution polymerization, suspension polymerization, bulk polymerization, and emulsion polymerization. Also, the polymerization reaction can be any of ionic polymerization, radical polymerization, living radical polymerization, various types of condensation polymerization, addition polymerization, and so forth. A known emulsifier and/or polymerization initiator may be used in the polymerization as necessary.
Note that solubility/insolubility of the polymer is determined through the amount of solvent-insoluble content as previously described. The "amount of solvent-insoluble content" can be adjusted by altering the types and amounts of monomers used in production of the polymer, the weight-average molecular weight of the polymer, and so forth. For

example, the amount of solvent-insoluble content can be increased by increasing the amount of an epoxy group-containing monomer and/or cross-linkable monomer used in production of the polymer.

<<Properties of insoluble polymer>>

[Volume-average particle diameter]

The volume-average particle diameter of the insoluble polymer is preferably 100 nm or more, and is preferably 500 nm or less, more preferably less than 400 nm, and even more preferably 380 nm or less. When the volume-average particle diameter of the insoluble polymer is 100 nm or more, adhesiveness of a functional layer formed using the slurry composition can be increased, and two battery members that are adjacent with the functional layer in-between can be caused to closely adhere strongly. On the other hand, when the volume-average particle diameter of the insoluble polymer is 500 nm or less, internal resistance of a secondary battery that includes a functional layer formed using the slurry composition can be even further reduced.

[Glass-transition temperature]

The glass-transition temperature of the insoluble polymer is preferably lower than 25°C, and more preferably 0°C or lower. When the glass-transition temperature of the insoluble polymer is lower than 25°C, a functional layer formed using the slurry composition and a separator substrate can be caused to closely adhere strongly. Note that the lower limit for the glass-transition temperature of the insoluble polymer is not specifically limited and can be set as -100°C or higher, or can be set as -50°C or higher, for example.

<<Quantitative mixing ratio of functional particles and insoluble polymer»

The content of the insoluble polymer in the slurry composition is required to be not less than 1 part by mass and not more than 10 parts by mass per 100 parts by mass of the functional particles, is preferably 1.5 parts by mass or more, more preferably 2 parts by mass or more, and even more preferably 2.5 parts by mass or more per 100 parts by mass of the functional particles, and is preferably 8 parts by mass or less, more preferably 6 parts by mass or less, even more preferably 5 parts by mass or less, and particularly preferably 4 parts by mass or less per 100 parts by mass of the functional particles. The internal resistance of a secondary battery increases in a situation in which the content of the insoluble polymer in the slurry composition is less than 1 part by mass per 100 parts by mass of the functional particles. On the other hand, inhibition of heat generation in the event of an internal short circuit of an obtained secondary battery decreases in a situation in which the content of the insoluble polymer in the slurry composition is more than 10 parts by mass per 100 parts by mass of the functional particles. In addition, the internal resistance of a secondary battery increases.

<Soluble polymer>

The soluble polymer can function as a viscosity modifier for modifying the viscosity of the presently disclosed slurry composition and can function as a component for inhibiting heat generation in the event of an internal short circuit of a non-aqueous secondary battery. Features of the soluble polymer are that it is soluble in the solvent contained in the slurry composition and has a thermal decomposition temperature of 130°C or higher.

No specific limitations are placed on the soluble polymer so long as it is soluble and has a thermal decomposition temperature of 130°C or higher. However, from a viewpoint of further inhibiting heat generation in the event of an internal short circuit of a secondary battery while also even further reducing internal resistance of the secondary battery, a cellulose derivative, a polyacrylic acid compound such as polyacrylic acid or a salt thereof (sodium salt, etc.), or polyvinyl alcohol is preferable, a cellulose derivative or a polyacrylic acid compound is more preferable, and a cellulose derivative is even more preferable.

Cellulose derivatives can be classified as non-ionic, anionic, and cationic.

Examples of non-ionic cellulose derivatives include alkyl celluloses such as methyl cellulose, methyl ethyl cellulose, ethyl cellulose, and microcrystalline cellulose; and hydroxyalkyl celluloses such as hydroxyethyl cellulose, hydroxybutyl methyl cellulose, hydroxypropyl cellulose, hydroxypropyl methyl cellulose, hydroxyethyl methyl cellulose, hydroxypropyl methyl cellulose stearoxy ether, carboxymethyl hydroxyethyl cellulose, alkyl hydroxyethyl cellulose, and nonoxynyl hydroxyethyl cellulose.

Examples of anionic cellulose derivatives include substitution products obtained by substitution of the non-ionic cellulose derivatives described above with various derivative groups and salts (sodium salts, ammonium salts, etc.) of these substitution products. Specific examples include sodium cellulose sulfate, carboxymethyl cellulose (CMC), and

salts of CMC.

Examples of cationic cellulose derivatives include low-nitrogen hydroxyethyl cellulose dimethyl diallylammonium chloride (polyquaternium-4), O-[2-hydroxy-3-(trimethylammonio)propyl]hydroxyethyl cellulose chloride (polyquaternium-10), and O-[2-hydroxy-3-(lauryldimethylammonio)propyl]hydroxyethyl cellulose chloride (polyquaternium-24).

Of the examples given above, carboxymethyl cellulose and carboxymethyl cellulose salts are preferable from a viewpoint of further inhibiting heat generation in the event of an internal short circuit of a secondary battery while also even further reducing internal resistance of the secondary battery.

[Thermal decomposition temperature]

The soluble polymer is required to have a thermal decomposition temperature of 130°C or higher. Moreover, the thermal decomposition temperature of the soluble polymer is preferably 140°C or higher, more preferably 150°C or higher, and even more preferably 160°C or higher. Heat generation in the event of an internal short circuit of a secondary battery increases in a situation in which the thermal decomposition temperature of the soluble polymer is lower than 130°C. Note that the upper limit for the thermal decomposition temperature of the soluble polymer is not specifically limited and can be set as 350°C or lower, or can be set as 300°C or lower, for example.

Also note that the thermal decomposition temperature of the soluble polymer can be adjusted by altering the type of soluble polymer, for example.

<<Quantitative mixing ratio of functional particles and soluble polymer>>

The content of the soluble polymer in the slurry composition is required to be not less than 1 part by mass and not more than 10 parts by mass per 100 parts by mass of the functional particles, is preferably 1.5 parts by mass or more, more preferably 2 parts by mass or more, even more preferably 2.5 parts by mass or more, and particularly preferably 2.6 parts by mass or more per 100 parts by mass of the functional particles, and is preferably 8 parts by mass or less, more preferably 6 parts by mass or less, even more preferably 5 parts by mass or less, and particularly preferably 4 parts by mass or less per 100 parts by mass of the functional particles. Heat generation in the event of an internal short circuit of a secondary battery increases due to reduction of functional layer thermal stability in a situation in which the content of the soluble polymer in the slurry composition is less than 1 part by mass per 100 parts by mass of the functional particles. On the other hand, viscosity of the slurry composition increases excessively and coatability of the slurry composition decreases in a situation in which the content of the soluble polymer in the slurry composition is more than 10 parts by mass per 100 parts by mass of the functional particles. As a consequence, it is not possible to form a uniform functional layer, and heat generation in the event of an internal short circuit of a secondary battery increases.

«Insoluble polymer/soluble polymer (mass ratio)»

A mass ratio of the content of the insoluble polymer relative to the content of the soluble polymer (insoluble polymer/soluble polymer (mass ratio)) in the slurry composition is preferably more than 0.30, more preferably 0.40 or more, even more preferably 0.50 or more, and particularly preferably 0.60 or more, and is preferably less than 6.0, more preferably 5.0 or less, and even more preferably 4.0 or less. When "insoluble polymer/soluble polymer (mass ratio)" is more than 0.30, heat generation in the event of an internal short circuit of a secondary battery can be further inhibited. On the other hand, when "insoluble polymer/soluble polymer (mass ratio)" is less than 6.0, heat generation in the event of an internal short circuit of a secondary battery can be further inhibited while also even further reducing internal resistance of the secondary battery.

<Solvent>

The solvent that is contained in the slurry composition is not specifically limited so long as it is a solvent in which the functional particles, insoluble polymer, and soluble polymer described above can be dissolved or dispersed, and either water or an organic solvent can be used. Examples of organic solvents that can be used include acetonitrile, N-methyl-2-pyrrolidone, tetrahydrofuran, acetone, acetylpyridine, cyclopentanone, dimethylformamide, dimethyl sulfoxide, methylformamide, methyl ethyl ketone, furfural, ethylenediamine, dimethylbenzene (xylene), methylbenzene (toluene), cyclopentyl methyl ether, and isopropyl alcohol.

Note that one of these solvents can be used individually, or a plurality of these solvents can be used as a mixture in a freely selected mixing ratio.

<Other components>

In addition to the functional particles (foaming agent particles and non-conductive particles), insoluble polymer, soluble polymer, and solvent described above, the presently disclosed slurry composition may optionally contain known additives that can be added to a functional layer, such as other polymers having different chemical compositions and properties from the insoluble polymer, soluble polymer, and non-conductive particles described above, conductive materials, wetting agents, viscosity modifiers, and additives for electrolyte solution.

Examples of wetting agents that can optionally be contained in the presently disclosed slurry composition include, but are not specifically limited to, polyether-based surfactants, sulfonic acid-based surfactants, fluorinated surfactants, silicon-based surfactants, and acetylene-based surfactants.

Specific examples of polyether-based surfactants include NOPTECHS ED052 (product name) produced by San Nopco Limited.

Specific examples of sulfonic acid-based surfactants include dioctylsulfosuccinic acid and salts thereof.

Specific examples of fluorinated surfactants include the MEGAFACE® series (MEGAFACE is a registered trademark in Japan, other countries, or both) produced by DIC Corporation, the Ftergent® series (Ftergent is a registered trademark in Japan, other countries, or both) produced by Neos Company Limited, and the Surflon® series (Surflon is a registered trademark in Japan, other countries, or both) produced by AGC.

Specific examples of silicon-based surfactants include dimethylpolysiloxane.

Specific examples of acetylene-based surfactants include the Surfynol® series (Surfynol is a registered trademark in Japan, other countries, or both) and the Dynol series produced by Air Products and Chemicals Inc.

Of these examples, it is preferable to use a polyether-based surfactant as a wetting agent from a viewpoint of improving stability of the slurry composition and even further reducing internal resistance of a secondary battery.

Note that one of these wetting agents may be used individually, or two or more of these wetting agents may be used in combination in a freely selected ratio.

The content of the above-described wetting agent in the slurry composition is preferably 0.1 parts by mass or more, more preferably 0.5 parts by mass or more, and even more preferably 1 part by mass or more per 100 parts by mass of the functional particles, and is preferably 3 parts by mass or less, more preferably 2.5 parts by mass or less, and even more preferably 2 parts by mass or less per 100 parts by mass of the functional particles. By setting the content of the wetting agent as 0.1 parts by mass or more per 100 parts by mass of the functional particles, wettability of the slurry composition with respect to a substrate improves, the occurrence of cissing is inhibited, and thus coatability of the slurry composition can be improved. As a consequence, heat generation in the event of an internal short circuit of a secondary battery can be further inhibited. Moreover, by setting the content of the wetting agent as 3 parts by mass or less per 100 parts by mass of the functional particles, close adherence between a functional layer and a substrate can be improved. Moreover, internal resistance of a secondary battery can be even further reduced.

<Production of slurry composition for non-aqueous secondary battery functional layer>

The slurry composition may be produced by mixing the components described above without any specific limitations. For example, the slurry composition can be produced by producing a binder composition that contains the foaming agent particles, the insoluble polymer, the soluble polymer, and the solvent, and subsequently adding and mixing other components (non-conductive particles, wetting agent, etc.) that are used as necessary and additional solvent with respect to the obtained binder composition. Specifically, the slurry composition can be produced by mixing the above-described components using a mixer such as a ball mill, a sand mill, a bead mill, a pigment disperser, a grinding machine, an ultrasonic disperser, a homogenizer, a planetary mixer, or a FILMIX.

(Separator for non-aqueous secondary battery)

The presently disclosed separator includes a separator substrate and a functional layer, wherein the functional layer is formed of a dried product of the presently disclosed slurry composition set forth above. As a result of the functional layer in the presently disclosed separator being formed from the presently disclosed slurry composition, it is possible to inhibit heat generation in the event of an internal short circuit of a secondary battery and to reduce internal resistance of the secondary battery through the presently disclosed separator. Note that functional layers may be formed at both sides of the separator substrate or a functional layer may be formed at just one side of the separator substrate in the presently disclosed separator.

<Separator substrate>

The separator substrate is not specifically limited and may be a known separator substrate such as an organic

separator substrate. The organic separator substrate is a porous member that is formed of an organic material. Examples of the organic separator substrate that are preferable from a viewpoint of enhancing cycle characteristics of a secondary battery while also even further reducing internal resistance of the secondary battery include a microporous membrane or non-woven fabric that contains a polyolefin resin such as polyethylene or polypropylene, a polyethylene terephthalate (PET) resin, an aromatic polyamide resin, or the like.

<Functional layer>

The functional layer is formed of a dried product of the presently disclosed slurry composition as previously described. In other words, the functional layer that is included in the presently disclosed separator normally contains at least foaming agent particles, an insoluble polymer, and a soluble polymer and optionally contains other components such as non-conductive particles and a wetting agent. Note that components contained in the functional layer are components that were contained in the presently disclosed slurry composition set forth above, and thus the preferred ratio of these components is the same as the preferred ratio of the components in the presently disclosed slurry composition. Also note that in a case in which a polymer such as the insoluble polymer is a polymer that includes a cross-linkable functional group (for example, an epoxy group or an oxazoline group), this polymer may be cross-linked during drying of the slurry composition or during heat treatment that is optionally performed after drying (i.e., the functional layer may contain a cross-linked product of the previously described insoluble polymer).

Moreover, although the functional layer, which is a dried product of the slurry composition, may contain a solvent such as water originating from the slurry composition, the solvent content in the functional layer is preferably 3 mass% or less, more preferably 1 mass% or less, even more preferably 0.1 mass% or less, and particularly preferably 0 mass% (below the limit of detection) from a viewpoint of ensuring battery characteristics (rate characteristics, etc.) of a secondary battery.

<Production method of separator for non-aqueous secondary battery>

Examples of methods by which the presently disclosed separator may be formed include the following methods.

(1) A method in which the presently disclosed slurry composition is supplied to a surface of the separator substrate and is then dried

(2) A method in which the presently disclosed slurry composition is supplied onto a releasable substrate and is dried to produce a functional layer that is then transferred onto the surface of the separator substrate

Of these methods, method (1) is particularly preferable since it allows simple control of the thickness of the functional layer. In more detail, method (1) includes a step of supplying the slurry composition onto the separator substrate (supply step) and a step of drying the slurry composition that has been applied onto the separator substrate to form a functional layer (drying step).

«Supply step»

Examples of methods by which the slurry composition may be supplied onto the separator substrate in the supply step include a method in which the slurry composition is applied onto the surface of the separator substrate and a method in which the separator substrate is immersed in the slurry composition. Specific examples of these methods include, but are not specifically limited to, doctor blading, reverse roll coating, direct roll coating, gravure coating, extrusion coating, brush coating, dip coating, spray coating, and vacuum impregnation.

It is preferable to use dip coating, spray coating, vacuum impregnation, or gravure coating in order to cause impregnation of an inner part of the separator substrate with the slurry composition.

<<Drying step>>

Any commonly known method can be adopted without any specific limitations as the method by which the slurry composition on the separator substrate is dried in the drying step. Examples of drying methods that may be used include drying by warm, hot, or low-humidity air, drying in a vacuum, and drying through irradiation with infrared light, electron beams, or the like. The drying temperature is preferably lower than 80°C, and more preferably lower than 60°C in order to avoid concerns of heat shrinkage of the separator substrate, and thermal decomposition and sublimation of the foaming agent particles and the soluble polymer.

Note that the thickness of the functional layer that is produced on the separator substrate as described above is preferably not less than 1 μm and not more than 5 μm from a viewpoint of ensuring strength of the functional layer

while also even further reducing internal resistance of a secondary battery.

(Non-aqueous secondary battery)

The presently disclosed secondary battery is a secondary battery that includes the presently disclosed separator set forth above. More specifically, the presently disclosed non-aqueous secondary battery includes a positive electrode, a negative electrode, a separator, and an electrolyte solution, wherein the separator is the presently disclosed separator for a non-aqueous secondary battery set forth above. The presently disclosed secondary battery has excellent inhibition of heat generation in the event of an internal short circuit and reduced internal resistance as a result of including the presently disclosed separator set forth above.

<Positive electrode, negative electrode, and separator>

The separator that is used in the presently disclosed secondary battery is the presently disclosed separator set forth above. Known positive electrodes and negative electrodes can be used as the positive electrode and the negative electrode without any specific limitations.

<<Positive electrode active material>>

The positive electrode that is used in the presently disclosed secondary battery contains a positive electrode active material. Known positive electrode active materials can be used as the positive electrode active material without any specific limitations. However, it is preferable to use a lithium metal complex oxide represented by a composition formula $Li_xNi_yMn_zCo_{(1-y-z)}O_2$ (where $0.95 \leq x$ <_ 1.2, $0.70 \leq y \leq 0.95$, $z > 0$, and $1 - y - z > 0$) as the positive electrode active material from a viewpoint of increasing the capacity of the secondary battery. $LiNi_{0.8}Mn_{0.1}Co_{0.1}O_2$ (NMC811), for example, is a specific example of the lithium metal complex oxide represented by the preceding composition formula that is preferable.

The amount and particle diameter of the positive electrode active material are not specifically limited and can be the same as those of a conventionally used positive electrode active material.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of non-aqueous secondary battery>

The presently disclosed non-aqueous secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. Note that the separator is the presently disclosed separator. In order to prevent pressure increase inside the secondary battery and occurrence of overcharging

or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

## EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the thermal decomposition temperature of foaming agent particles and a soluble polymer, the volume-average particle diameter of foaming agent particles and an insoluble polymer, the glass-transition temperature of an insoluble polymer, the amount of solvent-insoluble content in an insoluble polymer and a soluble polymer, the amount of foaming of foaming agent particles, and the IV resistance and inhibition of heat generation in the event of an internal short circuit of a secondary battery.

### <Thermal decomposition temperature of foaming agent particles>

The weight of foaming agent particles was measured while the foaming agent particles were heated from 25°C to 500°C at a heating rate of 10°C/min under a nitrogen atmosphere in thermogravimetric analysis using a thermogravimetry/differential thermal analyzer (produced by Hitachi High-Tech Science Corporation; product name: TG/DTA7200). The temperature (30% weight loss temperature) at which the measured weight reached 70% of the weight at the start of measurement (25°C) was taken to be the thermal decomposition temperature of the foaming agent particles.

### <Thermal decomposition temperature of soluble polymer>

The weight of a soluble polymer was measured while the soluble polymer was heated from 25°C to 500°C at a heating rate of 10°C/min under a nitrogen atmosphere in thermogravimetric analysis using a thermogravimetry/differential thermal analyzer (produced by Hitachi High-Tech Science Corporation; product name: TG/DTA7200). The temperature (30% weight loss temperature) at which the measured weight reached 70% of the weight at the start of measurement (25°C) was taken to be the thermal decomposition temperature of the soluble polymer.

### <Volume-average particle diameter>

The volume-average particle diameter of foaming agent particles or an insoluble polymer was measured as follows by laser diffraction. First, a produced water dispersion containing the foaming agent particles or water insoluble polymer was adjusted to a solid content concentration of 0.1 mass% to prepare a measurement sample. In a particle diameter distribution (by volume) measured using a laser diffraction particle size analyzer (produced by Beckman Coulter, Inc.; product name: LS-13320), the particle diameter D50 at which cumulative volume calculated from a small diameter end of the distribution reached 50% was taken to be the volume-average particle diameter.

### <Glass-transition temperature>

First, a produced water dispersion containing an insoluble polymer was dried at a temperature of 25°C for 48 hours, and the resultant powder was taken to be a measurement sample.

The measurement sample was weighed into an aluminum pan in an amount of 10 mg and was then measured by a differential scanning calorimeter (produced by SII NanoTechnology Inc.; product name: EXSTAR DSC6220) under conditions prescribed in JIS Z8703 with a measurement temperature range of -100°C to 200°C and a heating rate of 20°C/min to obtain a differential scanning calorimetry (DSC) curve. An empty aluminum pan was used as a reference. A temperature at which a derivative signal (DDSC) exhibited a peak in the heating process was determined as the glass-transition temperature (°C).

### <Amount of solvent-insoluble content>

A water dispersion of an insoluble polymer or an aqueous solution of a soluble polymer was dried in an environment of 50% humidity and 23°C to 25°C to produce a film of 3 ± 0.3 mm in thickness. Next, the produced film was cut up into 5 mm squares to prepare film pieces. Approximately 1 g of these film pieces were precisely weighed, and the weight of the precisely weighed film pieces was taken to be WO. The precisely weighed film pieces were then immersed in 100 g of a solvent (temperature: 25°C) of a slurry composition for 24 hours. After 24 hours of immersion, the film pieces were pulled out of the solvent, the pulled-out film pieces were vacuum dried at 105°C for 3 hours, and the weight (weight of insoluble content) W1 thereof was precisely weighed. The amount (%) of solvent-insoluble content was calculated by the following formula.

$$\text{Amount of solvent-insoluble content (\%)} = W1/W0 \times 100$$

<Amount of foaming of foaming agent particles>

Foaming agent particles were sealed in a Hastelloy vessel and were introduced into an ARC measurement device (produced by Netzsch). First, heating was performed to 40°C, which was taken to be the initial temperature, and then stepwise heating was performed in increments of 5°C while confirming that heat generation was not detected so as to raise the temperature to 400°C. The pressure at a point corresponding to 400°C was measured, and the amount of foaming converted for 25°C was calculated from a relationship between the charged amount of sample and the temperature through the following formula.

Amount of foaming of foaming agent particles ($cm^3$/g, 25°C) = Void volume in vessel ($cm^3$) × (298/673)/Weight of sealed foaming agent particles (g)

<IV resistance>

A lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage: 4.35 V) by a 0.2C constant-current method and CC discharged to 3.00 V by a 0.2C constant-current method. This charging and discharging at 0.2C was repeated three times. Thereafter, the lithium ion secondary battery was subjected to an operation of charging to a state of charge (SOC) of 50% at 0.2C in a 25°C environment. The lithium ion secondary battery was then left at rest for 600 seconds. The voltage at the 600$^{th}$ second was taken to be $V_0$. Thereafter, 10 seconds of discharging was performed by a 0.5C (= $I_{0.5}$) constant-current method, and the voltage at the 10$^{th}$ second was taken to be $V_{0.5}$. Charging was then performed by a 0.2C constant-current method for the amount of electricity discharged directly beforehand. Next, 10 seconds of discharging was performed by a 1.0C (= $I_{1.0}$) constant-current method, and the voltage at the 10$^{th}$ second was taken to be $V_{1.0}$. Charging was then performed by a 0.2C constant-current method for the amount of electricity discharged directly beforehand. Next, 10 seconds of discharging was performed by a 1.5C (= $I_{1.5}$) constant-current method, and the voltage at the 10$^{th}$ second was taken to be $V_{1.5}$. ($I_{0.5}$,$V_{0.5}$), ($I_{1.0}$,$V_{1.0}$), and ($I_{1.5}$,$V_{1.5}$) were plotted on an XY graph, the gradient b of a regression line was determined by the following formula, and this gradient b was taken to be DCR (direct current resistance).

[Math. 1]

$$b = \frac{\sum(x-\bar{x})(y-\bar{y})}{\sum(x-\bar{x})^2}$$

A DCR relative value was calculated for each example by taking the DCR in Example 1 to be 100 and was evaluated by the following standard. A smaller DCR relative value indicates that the lithium ion secondary battery has lower IV resistance and has reduced internal resistance.

A: DCR relative value of 103 or less

B: DCR relative value of more than 103 and not more than 105
C: DCR relative value of more than 105 and not more than 110
D: DCR relative value of more than 110

<Inhibition of heat generation in event of internal short circuit (forced internal short circuit test)>

A lithium ion secondary battery of each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage: 4.35 V) by a 0.2C constant-current method and CC discharged to 3.00 V by a 0.2C constant-current method. This charging and discharging at 0.2C was repeated three times. The lithium ion secondary battery was subsequently charged to 4.35 V (cut-off condition: 0.02C) by a constant-voltage constant-current (CC-CV) method at a charge rate of 0.2C in a 25°C atmosphere. Thereafter, an iron nail of 3 mm in diameter and 10 cm in length was caused to pierce the lithium ion secondary battery at an approximately central location at a speed of 5 m/min so as to cause a forced short circuit. A forced short circuit was performed for each of five lithium ion secondary batteries (test subjects) prepared by the same operations, and an evaluation was made by the following standard based on the number of test subjects in which rupturing and ignition did not occur. A larger number of test subjects in which rupturing and ignition do not occur indicates that the lithium ion secondary battery has better inhibition of heat generation in the event of an internal short circuit.

A: Number of test subjects in which rupturing and ignition do not occur is 4 or 5
B: Number of test subjects in which rupturing and ignition do not occur is 3
C: Number of test subjects in which rupturing and ignition do not occur is 2
D: Number of test subjects in which rupturing and ignition do not occur is 1 or 0

(Example 1)

<Production of insoluble polymer (polymer A)>

A reactor including a stirrer was supplied with 70 parts of deionized water and 0.5 parts of ammonium persulfate. The gas phase was purged with nitrogen gas, and the temperature was raised to 60°C. Meanwhile, a monomer composition was obtained in a separate vessel by mixing 50 parts of deionized water, 0.5 parts of polyoxyethylene lauryl ether (produced by Kao Corporation; product name: EMULGEN® 120 (EMULGEN is a registered trademark in Japan, other countries, or both)) as an emulsifier, 65 parts of 2-ethylhexyl acrylate as a (meth)acrylic acid alkyl ester monomer (ester group-containing monomer), 30 parts of styrene as an aromatic monovinyl monomer, 1.7 parts of allyl glycidyl ether as an epoxy group-containing monomer, 0.3 parts of allyl methacrylate as a cross-linkable monomer, and 3 parts of acrylic acid as a carboxy group-containing monomer.
The monomer composition was continuously added into the reactor over 4 hours to perform polymerization. The reaction was carried out at 70°C during the continuous addition. Once the continuous addition was complete, a further 3 hours of stirring was performed at 80°C, and the reaction was ended to yield a water dispersion of a polymer A as an insoluble polymer.
The obtained water dispersion of the polymer A as an insoluble polymer was cooled to 25°C and was subsequently adjusted to pH 8.0 through addition of sodium hydroxide aqueous solution. Thereafter, steam was introduced in order to remove unreacted monomer. Filtration was subsequently performed using a 200-mesh (opening size: approximately 77 μm) stainless steel screen while adjusting the solid content concentration with deionized water so as to obtain a water dispersion (solid content concentration: 40%) of the polymer A as an insoluble polymer. Note that upon measurement of the volume-average particle diameter and glass-transition temperature of the insoluble polymer, the volume-average particle diameter was 300 nm and the glass-transition temperature was -25°C.

<Production of slurry composition for non-aqueous secondary battery functional layer>

A slurry composition was produced by adding together 100 parts of melamine cyanurate (volume-average particle diameter: 300 nm; thermal decomposition temperature: 350°C) as foaming agent particles, 3 parts (in terms of solid content) of carboxymethyl cellulose (thermal decomposition temperature: 180°C) as a soluble polymer, 2.5 parts (in terms of solid content) of the water dispersion of the polymer A, and 1.5 parts of NOPTECHS ED052 (produced by San Nopco Limited) as a wetting agent, further adding deionized water as a solvent so as to adjust the slurry solid content

concentration to 20%, and performing 30 minutes of stirring using a Three-One Motor.

<Production of separator including functional layer>

A separator substrate made of a single layer of polypropylene (produced by Celgard, LLC.; product name: #2500) was prepared. The slurry composition obtained as described above was applied onto the separator substrate using a bar coater. After application, drying was performed at a temperature of 50°C in a safety oven to obtain a separator including a functional layer (functional layer thickness: 3 μm) at one side of the separator substrate.

<Production of negative electrode>

A 5 MPa pressure-resistant vessel equipped with a stirrer was charged with 63 parts of styrene, 34 parts of 1,3-butadiene, 2 parts of itaconic acid, 1 part of 2-hydroxyethyl acrylate, 0.3 parts of t-dodecyl mercaptan as a molecular weight modifier, 5 parts of sodium dodecylbenzenesulfonate as an emulsifier, 150 parts of deionized water, and 1 part of potassium persulfate as a polymerization initiator. These materials were thoroughly stirred and were then heated to a temperature of 55°C to initiate polymerization. At the point at which monomer consumption reached 95.0%, cooling was performed to quench the reaction. A water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to a temperature of 30°C or lower to yield a water dispersion (binder composition for a negative electrode) containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part in terms of solid content of carboxymethyl cellulose. These materials were diluted to a solid content concentration of 60% with deionized water and were then kneaded at a rotation speed of 45 rpm for 60 minutes. Thereafter, 1.5 parts in terms of solid content of the binder composition for a negative electrode obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 μm in thickness serving as a current collector by a comma coater such as to have a coating weight of 11 ± 0.5 mg/cm$^2$. The copper foil with the slurry composition for a negative electrode applied thereon was subsequently conveyed inside an oven having a temperature of 80°C for 2 minutes and an oven having a temperature of 110°C for 2 minutes at a speed of 400 mm/min so as to dry the slurry composition for a negative electrode on the copper foil and thereby obtain a negative electrode web having a negative electrode mixed material layer formed on the current collector. Thereafter, the negative electrode mixed material layer-side of the produced negative electrode web was roll pressed with a line pressure of 11 t (tons) in an environment having a temperature of 25 ± 3°C to obtain a negative electrode having a negative electrode mixed material layer density of 1.60 g/cm$^3$.

<Production of positive electrode>

A planetary mixer was charged with 96.0 parts of NMC811 ($LiNi_{0.8}Mn_{0.1}Co_{0.1}O_2$) as a positive electrode active material, 2.0 parts in terms of solid content of carbon black (produced by Denka Company Limited; product name: Li-100) as a conductive material, and 2.0 parts of polyvinylidene fluoride (produced by Solvay; product name: Solef® 5130 (Solef is a registered trademark in Japan, other countries, or both)), and these materials were mixed. In addition, N-methylpyrrolidone (NMP) was gradually added, and stirred mixing was performed at a temperature of 25 ± 3°C and a rotation speed of 60 rpm to obtain a slurry composition for a positive electrode having a viscosity of 3,600 mPa·s (measured by B-type viscometer at 25 ± 3°C and 60 rpm (M4 rotor)).

The slurry composition for a positive electrode was applied onto aluminum foil of 20 μm in thickness serving as a current collector by a comma coater such as to have a coating weight of 10 ± 0.5 mg/cm$^2$. The aluminum foil was conveyed inside an oven having a temperature of 90°C for 2 minutes and an oven having a temperature of 120°C for 2 minutes at a speed of 0.5 m/min so as to dry the slurry composition for a positive electrode on the aluminum foil and thereby obtain a positive electrode web (lower layer) having a positive electrode mixed material layer formed on the current collector. Thereafter, the positive electrode mixed material layer-side of the produced positive electrode web was roll pressed with a load of 14 t (tons) in an environment having a temperature of 25 ± 3°C to obtain a positive electrode having a positive electrode mixed material layer density of 3.80 g/cm$^3$ and a positive electrode mixed material layer thickness of 53 μm.

<Production of secondary battery>

The obtained negative electrode, positive electrode, and separator were used to produce a stacked laminate cell (initial design discharge capacity equivalent to 3 Ah). During cell production, the functional layer of the separator was arranged facing the positive electrode. The obtained laminate was arranged inside of aluminum packing and was subjected to vacuum drying under conditions of 60°C and 10 hours. Thereafter, a $LiPF_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was loaded as an electrolyte solution. The aluminum packing was then closed by heat sealing at a temperature of 150°C to tightly seal an opening of the aluminum packing, and thereby produce a lithium ion secondary battery.

IV resistance and inhibition of heat generation in the event of an internal short circuit were evaluated for this lithium ion secondary battery. The results are shown in Table 1.

(Examples 2 to 5 and Example 9)

An insoluble polymer, a slurry composition for a non-aqueous secondary battery functional layer, a separator including a functional layer, a negative electrode, a positive electrode, and a secondary battery were prepared or produced in the same way as in Example 1 with the exception that the amounts of melamine cyanurate, the insoluble polymer (polymer A), and carboxymethyl cellulose were changed as indicated in Table 1 in production of the slurry composition for a non-aqueous secondary battery functional layer. Evaluations were conducted in the same manner as in Example 1. The results are shown in Table 1.

(Example 6)

An insoluble polymer, a slurry composition for a non-aqueous secondary battery functional layer, a separator including a functional layer, a negative electrode, a positive electrode, and a secondary battery were prepared or produced in the same way as in Example 1 with the exception that melamine (volume-average particle diameter: 800 nm; thermal decomposition temperature: 300°C) was used instead of melamine cyanurate as foaming agent particles in production of the slurry composition for a non-aqueous secondary battery functional layer. Evaluations were conducted in the same manner as in Example 1. The results are shown in Table 1.

(Example 7)

An insoluble polymer, a slurry composition for a non-aqueous secondary battery functional layer, a separator including a functional layer, a negative electrode, a positive electrode, and a secondary battery were prepared or produced in the same way as in Example 1 with the exception that azodicarbonamide (volume-average particle diameter: 800 nm; thermal decomposition temperature: 220°C) was used instead of melamine cyanurate as foaming agent particles in production of the slurry composition for a non-aqueous secondary battery functional layer. Evaluations were conducted in the same manner as in Example 1. The results are shown in Table 1.

(Example 8)

An insoluble polymer, a slurry composition for a non-aqueous secondary battery functional layer, a separator including a functional layer, a negative electrode, a positive electrode, and a secondary battery were prepared or produced in the same way as in Example 1 with the exception that sodium polyacrylate (thermal decomposition temperature: higher than 150°C (>150°C)) was used instead of carboxymethyl cellulose as a soluble polymer in production of the slurry composition for a non-aqueous secondary battery functional layer. Evaluations were conducted in the same manner as in Example 1. The results are shown in Table 1.

(Example 10)

A slurry composition for a non-aqueous secondary battery functional layer, a separator including a functional layer, a negative electrode, a positive electrode, and a secondary battery were prepared or produced in the same way as in Example 1 with the exception that a polymer B produced as described below was used instead of the polymer A as an insoluble polymer in production of the slurry composition for a non-aqueous secondary battery functional layer. Evaluations were conducted in the same manner as in Example 1. The results are shown in Table 1.

<Production of insoluble polymer (polymer B)>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate. The gas phase was purged with nitrogen gas, and the temperature was raised to 60°C.

Meanwhile, a monomer composition was obtained in a separate vessel by mixing 50 parts of deionized water, 0.5 parts of sodium dodecylbenzenesulfonate as a dispersant, 94.2 parts of n-butyl acrylate (BA) as a (meth)acrylic acid alkyl ester monomer (ester group-containing monomer), 2 parts of methacrylic acid (MAA) as a carboxy group-containing monomer, 2 parts of acrylonitrile (AN) as a nitrile group-containing monomer, 0.3 parts of allyl methacrylate (AMA) as a cross-linkable monomer, and 1.5 parts of allyl glycidyl ether (AGE) as an epoxy group-containing monomer. The monomer composition was continuously added into the reactor over 4 hours to perform polymerization. The reaction was carried out at 60°C during the addition. Once the addition was complete, a further 3 hours of stirring was performed at 70°C, and the reaction was ended to yield a water dispersion of a polymer B as an insoluble polymer.

The obtained water dispersion of the polymer B as an insoluble polymer was cooled to 25°C and was subsequently adjusted to pH 8.0 through addition of sodium hydroxide aqueous solution. Thereafter, steam was introduced in order to remove unreacted monomer. Filtration was subsequently performed using a 200-mesh (opening size: approximately 77 μm) stainless steel screen while adjusting the solid content concentration with deionized water so as to obtain a water dispersion (solid content concentration: 40%) of the polymer B as an insoluble polymer. Note that upon measurement of the volume-average particle diameter and glass-transition temperature of the insoluble polymer, the volume-average particle diameter was 360 nm and the glass-transition temperature was -39°C.

(Comparative Examples 1 to 4)

An insoluble polymer, a slurry composition for a non-aqueous secondary battery functional layer, a separator including a functional layer, a negative electrode, a positive electrode, and a secondary battery were prepared or produced in the same way as in Example 1 with the exception that the amounts of the insoluble polymer (polymer A) and carboxymethyl cellulose were changed as indicated in Table 2 in production of the slurry composition for a non-aqueous secondary battery functional layer. Evaluations were conducted in the same manner as in Example 1. The results are shown in Table 2.

In Tables 1 and 2, shown below:

"Amount of foaming" indicates amount of foaming (converted for 25°C and 1 atm) of foaming agent particles at 400°C;
"Insoluble polymer/Soluble polymer (mass ratio)" indicates mass ratio of content of insoluble polymer relative to content of soluble polymer in slurry composition;
"CMC" indicates carboxymethyl cellulose;
"PAA" indicates sodium polyacrylate; and
">150" indicates higher than 150°C.

Note that "Insoluble polymer/Soluble polymer (mass ratio)" in Tables 1 and 2 is displayed to two significant figures after rounding a value calculated from charged amounts of the soluble polymer and the insoluble polymer.

[Table 1]

| | Example 1 | Example 2 | Example 3 | Example 4 | Example 5 | Example 6 | Example 7 | Example 8 | Example 9 | Example 10 |
|---|---|---|---|---|---|---|---|---|---|---|

(continued)

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Slurry composition for functional layer | Functional particles | Foaming agent particles | Type | Melanine cyanurate | Melamine cyanurate | Melamine cyanurate | Melanine cyanurate | Melamine cyamrate | Melanine | Azodicarbonamide | Melamine cyanurate | Melanine cyanurate | Melanine cyanurate |
| | | | Thermal decomposition temperature [°C] | 350 | 350 | 350 | 350 | 350 | 300 | 220 | 350 | 350 | 350 |
| | | | Volume-average particle diameter [nm] | 300 | 300 | 300 | 300 | 300 | 800 | 800 | 300 | 300 | 300 |
| | | | Amount of foaming [$cm^3/g$] | 80 | 80 | 80 | 80 | 80 | 100 | 250 | 80 | 80 | 80 |
| | | | Amount [parts by mass] | 100 | 100 | 100 | 100 | 100 | 100 | 100 | 100 | 100 | 100 |
| | Insoluble polymer | Type | | Polymer A | Polymer A | Polymer A | Polymer A | Polymer A | Polymer A | Polymer A | Polymer A | Polymer A | Polymers |
| | | Functional groups | | Carboxy group Epoxy group Ester group | Carboxy group Epoxy group Ester group | Carboxy group Epoxy group Ester group | Carboxy group Epoxy group Ester group | Carboxy group Epoxy group Ester group | Carboxy group Epoxy group Ester group | Carboxy group Epoxy group Ester group | Carboxy group Epoxy group Ester group | Carboxy group Epoxy group Ester group | Carboxy group Epoxy group Ester group |
| | | Volume-average particle diameter [nm] | | 300 | 300 | 300 | 300 | 300 | 300 | 300 | 300 | 300 | 360 |
| | | Glass-transition temperature [°C] | | -25 | -25 | -25 | -25 | -25 | -25 | -25 | -25 | -25 | -39 |
| | | Amount [parts by mass] | | 2.5 | 2.5 | 2.5 | 1 | 10 | 2.5 | 2.5 | 2.5 | 1.5 | 2.5 |
| | Soluble polymer | Type | | CMC | CMC | CMC | CMC | CMC | CMC | CMC | PAA | CMC | CMC |
| | | Thermal decomposition temperature [°C] | | 180 | 180 | 180 | 180 | 180 | 180 | 180 | >150 | 180 | 180 |
| | | Amount [parts by mass] | | 3 | 1 | 10 | 3 | 3 | 3 | 3 | 3 | 10 | 3 |
| | Insoluble polymer/Soluble polymer (mass ratio) | | | 0.83 | 2.5 | 0.25 | 0.33 | 3.3 | 0.83 | 0.83 | 0.83 | 0.15 | 0.83 |

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Evaluation | IV resistance | A | A | A | B | A | A | A | B | B | A |
| | Heat generation in event of internal short circuit | A | B | B | A | B | B | C | B | B | A |

[Table 2]

| | | | | Comparative Example 1 | Comparative Example 2 | Comparative Example 3 | Comparative Example 4 |
|---|---|---|---|---|---|---|---|
| Slurry composition for functional layer | Functional particles | Foaming agent particles | Type | Melamine cyanurate | Melamine cyanurate | Melamine cyanurate | Melamine cyanurate |
| | | | Thermal decomposition temperature [°C] | 350 | 350 | 350 | 350 |
| | | | Volume-average particle diameter [nm] | 300 | 300 | 300 | 300 |
| | | | Amount of foaming [$cm^3/g$] | 80 | 80 | 80 | 80 |
| | | | Amount [parts by mass] | 100 | 100 | 100 | 100 |
| | Insoluble polymer | Type | | Polymer A | Polymer A | Polymer A | Polymer A |
| | | Functional groups | | Carboxy group Epoxy group Ester group | Carboxy group Epoxy group Ester group | Carboxy group Epoxy group Ester group | Carboxy group Epoxy group Ester group |
| | | Volume-average particle diameter [nm] | | 300 | 300 | 300 | 300 |
| | | Glass-transition temperature [°C] | | -25 | -25 | -25 | -25 |
| | | Amount [parts by mass] | | 2 | 2 | 0.5 | 11 |
| | Soluble polymer | Type | | CMC | CMC | CMC | CMC |
| | | Thermal decomposition temperature [°C] | | 180 | 180 | 180 | 180 |
| | | Amount [parts by mass] | | 0.5 | 11 | 4.5 | 4.5 |
| | Insoluble polymer/Soluble polymer (mass ratio) | | | 4.0 | 0.18 | 0.11 | 2.4 |
| Evaluation | IV resistance | | | B | B | D | C |
| | Heat generation in event of internal short circuit | | | D | D | C | D |

It can be seen from Table 1 that it was possible to form a secondary battery having excellent inhibition of heat generation in the event of an internal short circuit and reduced internal resistance in Examples 1 to 10 in which the used slurry composition contained foaming agent particles, an insoluble polymer, a soluble polymer having a thermal decomposition temperature of 130°C or higher, and a solvent and had quantitative ratios of the insoluble polymer and the soluble polymer relative to functional particles that were within specific ranges.

In contrast, it can be seen from Table 2 that inhibition of heat generation in the event of an internal short circuit of a secondary battery decreased in Comparative Examples 1 and 2 in which the used slurry composition had a quantitative ratio of a soluble polymer relative to functional particles that was outside of a specific range.

It can also be seen from Table 2 that internal resistance of a secondary battery increased and inhibition of heat generation in the event of an internal short circuit of the secondary battery decreased in Comparative Examples 3 and 4 in which the used slurry composition had a quantitative ratio of an insoluble polymer relative to functional particles that

was outside of a specific range.

INDUSTRIAL APPLICABILITY

According to the present disclosure, it is possible to provide a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery.

Moreover, according to the present disclosure, it is possible to provide a separator for a non-aqueous secondary battery including a functional layer that can inhibit heat generation in the event of an internal short circuit of a non-aqueous secondary battery and can also reduce internal resistance of the non-aqueous secondary battery.

Furthermore, according to the present disclosure, it is possible to provide a non-aqueous secondary battery having excellent inhibition of heat generation in the event of an internal short circuit and reduced internal resistance.

## Claims

**1.** A slurry composition for a non-aqueous secondary battery functional layer comprising functional particles, an insoluble polymer, a soluble polymer, and a solvent, wherein

the functional particles include foaming agent particles,
content of the insoluble polymer is not less than 1 part by mass and not more than 10 parts by mass per 100 parts by mass of the functional particles,
content of the soluble polymer is not less than 1 part by mass and not more than 10 parts by mass per 100 parts by mass of the functional particles, and
the soluble polymer has a thermal decomposition temperature of 130°C or higher.

**2.** The slurry composition for a non-aqueous secondary battery functional layer according to claim 1, wherein the soluble polymer is selected from the group consisting of a cellulose derivative, polyvinyl alcohol, and a polyacrylic acid compound.

**3.** The slurry composition for a non-aqueous secondary battery functional layer according to claim 1, wherein the insoluble polymer includes one or more functional groups selected from the group consisting of a carboxy group, a hydroxyl group, an amino group, an epoxy group, an oxazoline group, a sulfo group, a nitrile group, an ester group, and an amide group.

**4.** The slurry composition for a non-aqueous secondary battery functional layer according to claim 1, wherein the foaming agent particles have a thermal decomposition temperature of not lower than 150°C and not higher than 450°C.

**5.** The slurry composition for a non-aqueous secondary battery functional layer according to claim 1, wherein an amount of foaming of the foaming agent particles at 400°C is 10 $cm^3/g$ or more as converted for 25°C and 1 atm.

**6.** The slurry composition for a non-aqueous secondary battery functional layer according to claim 1, wherein the foaming agent particles are a melamine compound.

**7.** The slurry composition for a non-aqueous secondary battery functional layer according to claim 6, wherein the melamine compound is melamine cyanurate.

**8.** The slurry composition for a non-aqueous secondary battery functional layer according to claim 1, wherein a mass ratio of content of the insoluble polymer relative to content of the soluble polymer is more than 0.30 and less than 6.0.

**9.** The slurry composition for a non-aqueous secondary battery functional layer according to claim 1, further comprising a wetting agent.

**10.** A separator for a non-aqueous secondary battery comprising: a separator substrate; and a functional layer on the separator substrate, wherein the functional layer is a dried product of the slurry composition for a non-aqueous secondary battery functional layer according to any one of claims 1 to 9.

**11.** A non-aqueous secondary battery comprising a positive electrode, a negative electrode, a separator, and an electrolyte solution, wherein the separator is the separator for a non-aqueous secondary battery according to claim 10.

**12.** The non-aqueous secondary battery according to claim 11, wherein

the positive electrode contains a positive electrode active material, and
the positive electrode active material is a lithium metal complex oxide represented by a composition formula $Li_xNi_yMn_zCo_{(1-y-z)}O_2$, where $0.95 \leq x \leq 1.2$, $0.70 \leq y \leq 0.95$, $z > 0$, and $1 - y - z > 0$.

## INTERNATIONAL SEARCH REPORT

International application No.
**PCT/JP2022/024401**

**A. CLASSIFICATION OF SUBJECT MATTER**

***H01M 50/403***(2021.01)i; ***H01M 4/505***(2010.01)i; ***H01M 4/525***(2010.01)i; ***H01M 10/0566***(2010.01)i; ***H01M 50/411***(2021.01)i; ***H01M 50/414***(2021.01)i; ***H01M 50/42***(2021.01)i; ***H01M 50/429***(2021.01)i; ***H01M 50/443***(2021.01)i; ***H01M 50/449***(2021.01)i
FI: H01M50/403 D; H01M4/505; H01M4/525; H01M10/0566; H01M50/411; H01M50/414; H01M50/42; H01M50/429; H01M50/443 Z; H01M50/449

According to International Patent Classification (IPC) or to both national classification and IPC

**B. FIELDS SEARCHED**

Minimum documentation searched (classification system followed by classification symbols)

H01M50/403; H01M4/505; H01M4/525; H01M10/0566; H01M50/411; H01M50/414; H01M50/42; H01M50/429; H01M50/443; H01M50/449

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/155345 A1 (NIPPON ZEON CO., LTD.) 30 August 2018 (2018-08-30) | 1-12 |
| A | JP 2006-187891 A (KEIWA INC.) 20 July 2006 (2006-07-20) | 1-12 |
| A | JP 2017-39250 A (FUJIFILM CORP.) 23 February 2017 (2017-02-23) | 1-12 |
| A | JP 2015-138657 A (TOYOTA MOTOR CORP.) 30 July 2015 (2015-07-30) | 1-12` |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 July 2022** | **26 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/024401**

| Patent document cited in search report | Publication date (day/month/year) | Patent family member(s) | Publication date (day/month/year) |
|---|---|---|---|
| WO 2018/155345 A1 | 30 August 2018 | EP 3588636 A1<br>CN 110268563 A<br>KR 10-2019-0121303 A | |
| JP 2006-187891 A | 20 July 2006 | (Family: none) | |
| JP 2017-39250 A | 23 February 2017 | (Family: none) | |
| JP 2015-138657 A | 30 July 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020040163 A1